# EUROPEAN PATENT APPLICATION

(11) **EP 3 295 893 A1**
(43) Date of publication of application: **21.03.2018**
(21) Application number: 16189252.6
(22) Date of filing: 16.09.2016
(51) Int. Cl.: A61C 13/00

(54) **A METHOD FOR GENERATING A VIRTUAL MODEL OF A MAXILLARY CAST OR A MANDIBULAR CAST IN A VIRTUAL ARTICULATOR**

(71) Applicant: GC Europe N.V., 3001 Leuven (BE)
(72) Inventor: Miltau, Kevin, 5575 Willerzie (BE); Kamers, Bram, 3211 Binkom (BE); Weiss, Özlem, 65824 Schwalbach am Taunus (DE); Swinkels, Nancy, 2491 Olmen (BE)
(74) Representative: Gevers Patents

(57) **Abstract**

A method (100) comprising: receiving (110), from a memory, a virtual articulator dataset representing a virtual articulator reference model (A) comprising a first cloud of markers and a second cloud of markers; receiving (120) a first dataset representing a virtual model of a maxillary cast provided in a first holder; receiving (120) a second dataset representing a virtual model of a mandibular cast provided in a second holder; and creating (130) a third dataset by aligning the first dataset and the second dataset with the virtual articulator dataset. Since the virtual articulator dataset is stored, only two scans need to be performed to create the full virtual model of the maxillary cast and the mandibular cast in the virtual articulator.

## Description

### Technical field

The present invention relates to a computer-implemented method for generating a virtual model of a maxillary cast and a mandibular cast in a virtual articulator to correspond to a maxillary cast and a mandibular cast in a physical articulator. The present invention also relates to a computer-implemented method for generating a virtual model of a maxillary cast in a virtual articulator to correspond to a maxillary cast in a physical articulator. The present invention further relates to a computer-implemented method for generating a virtual model of a mandibular cast in a virtual articulator to correspond to a mandibular cast in a physical articulator.

### State of the art

In the state of the art virtual articulators are generally used in the context of repairing a clinical dental malfunction of a patient by using a fixed or a removable prosthetic replacement, e.g. crowns, bridges, implants, etc. In particular, the virtual articulator is used to simulate the articulation of the jawbones of the patient to determine the needed design of the prosthetic replacement. This simulation is usually done in CAD software packages.

The virtual articulator needs to be able to perform the same movements as the temporomandibular joint (TMJ), which is the joint which allows movement of the lower jawbone. When the TMJ joint articulates normally, the mouth opens and closes per its normal operation without pain, restriction or hyperextension. The TMJ also allows lateral movements of the jaw which help the teeth to grind food between them while chewing. Normally, the vertical articulation of the jaw with the skull ranges from approximately forty 40 mm to 60 mm from tooth top to tooth top across the open mouth, with a vertical articulation of 45 mm being normal. Laterally, the TMJ allows an articulation of approximately 7 mm from side to side. Measurement of these articulation distances serves to indicate proper functioning of the TMJ.

In the state of the art there are, in general, two different methods for designing a prosthetic dental replacement using dental articulation, i.e. the recognition and simulation of the movements of the TMJ and jaws by attaching a maxillary, i.e. the upper jawbone, cast and a mandibular, i.e. the lower jawbone, cast in an articulator. In particular, there is a non-digital method, which uses an articulator only, and a digital method, which uses both an articulator and a virtual articulator.

Both the non-digital and the digital method start by capturing the dental situation of the maxillary and mandibular jaw with an impression to produce a copy of the dental situation with stone casts. Next, the occlusion is captured by using an impression material with a bite registration or articulating paper. Optionally, the jaw movements of the patient are also recorded using a facebow or a similar device. The recorded jaw movements are then transferred into an articulator. Next, the casts are positioned in the articulator. Optionally, the articulator is adjusted according to further clinical information.

Because the design of prosthetic replacements is a very specialised field most dentists do not do this themselves. Therefore, in general, the whole set-up, i.e. the articulator and the casts placed into the articulator, is transported to a specialised dental laboratory. Alternatively, the articulated casts are placed into a transfer device which is transported to the specialised dental laboratory. This laboratory then adjusts their own articulator using the transfer device. In the latter case, the specialised dental laboratory also ensures that they use the same brand of articulator.

In the non-digital method the prosthetic dental replacement is now designed with well-known manual procedures using the articulator with the articulated casts.

In the digital method all data captured by positioning the casts in the articulator or in the transfer device are now transferred to a virtual articulator. This transfer process includes multiple steps:
1. scan the empty articulator or the empty transfer device to identify the articulator type and to perform spatial referencing;
2. scan the articulator or the transfer device with the mandibular and maxillary casts placed in the articulator or in the transfer device;
3. scan the mandibular cast while placed in the articulator or in the transfer device from the top;
4. scan the mandibular cast while placed in the articulator or in the transfer device from the bottom;
5. scan the maxillary cast while placed in the articulator or in the transfer device from the top;
6. scan the maxillary cast while placed in the articulator or in the transfer device from the bottom; and
7. scan the bite registration on the mandibular cast from the bottom.

These seven scanning steps enable the identification and calibration of a virtual articulator with a virtual model of the mandibular and maxillary casts placed in the virtual articulator.

The virtual articulator is already known in the state of the art, for example the commercially available "exocad® DentalCAD" software package. The virtual articulator allows performing the same movements as a mechanical articulator with various different perspectives and cross-sectional views. As such, the prosthetic dental replacement can be designed in the virtual system. Different methods for designing the prosthetic dental replacement are known, see for example WO-A-2013/050536 or WO-A-2012/140021.

Both in the digital and in the non-digital method there is an optional control step in which the occlusion, the protrusion, the retrusion, etc. of the teeth with the prosthetic replacement are checked and, if needed, corrections are done to the prosthetic replacement before insertion into the patient.

A downside of the digital method is that it is time consuming to perform the seven scanning steps for each prosthetic dental replacement that needs to be designed. Furthermore, since the virtual articulator is calibrated by a single scan only, namely the second scan which establishes a distance between the casts in the articulator, the accuracy of this calibration is not very high.

### Disclosure of the invention

It is an object of the present invention to provide a method for generating a virtual model of a maxillary cast and a mandibular cast in a virtual articulator to correspond to a maxillary cast and a mandibular cast in a physical articulator which is less time consuming.

This object is achieved according to the invention with a computer-implemented method for generating a virtual model of a maxillary cast and a mandibular cast in a virtual articulator to correspond to a maxillary cast and a mandibular cast in a physical articulator by using a first holder on which a first cloud of markers is applied and a second holder on which a second cloud of markers is applied, the method comprising the steps of: a) receiving, from a memory, a virtual articulator dataset representing a virtual articulator reference model calibrated to correspond to the physical articulator, the virtual articulator reference model comprising the first cloud of markers and the second cloud of markers; b) receiving a first dataset created by a scanner and representing a virtual model of the maxillary cast provided in the first holder; c) receiving a second dataset created by a scanner and representing a virtual model of the mandibular cast provided in the second holder; d) creating a third dataset by aligning the first cloud of markers in the first dataset with the first cloud of markers in the virtual articulator dataset and by aligning the second cloud of markers in the second dataset with the second cloud of markers in the virtual articulator dataset; and e) processing the third dataset to display the virtual model of the maxillary cast and the mandibular cast in the virtual articulator.

By providing a virtual articulator dataset which is stored in the memory and comprises a virtual articulator dataset representing a virtual articulator reference model calibrated to correspond to the physical articulator, the scanned maxillary cast in the first holder and the scanned mandibular cast in the second holder can be relatively positioned in the virtual articulator reference model by aligning the markers. As such, only two scans need to be performed to create the full virtual model of the maxillary cast and the mandibular cast in the virtual articulator which results in a serious time saving.

In an embodiment of the present invention, step b) comprises: b1) determining if the first cloud of markers in the first dataset can be aligned with the first cloud of markers in the virtual articulator dataset; and b2) displaying an error message if the first cloud of markers in the first dataset can not be aligned with the first cloud of markers in the virtual articulator dataset.

In this embodiment, a check is performed to determine that the specific first holder used was also used in creating the virtual articulator reference model. If not, an error message is displayed to prevent a wrong first holder being used as this could lead to a wrong virtual model.

In a preferred embodiment, step b) further comprises b3) requesting a new first dataset.

In this preferred embodiment, the user is requested to provide a new first dataset in order to continue generating the virtual model.

In an embodiment of the present invention, step c) comprises: c1) determining if the second cloud of markers in the second dataset can be aligned with the second cloud of markers in the virtual articulator dataset; and c2) displaying an error message if the second cloud of markers in the second dataset can not be aligned with the second cloud of markers in the virtual articulator dataset.

In this embodiment, a check is performed to determine that the specific second holder used was also used in creating the virtual articulator reference model. If not, an error message is displayed to prevent a wrong second holder being used as this could lead to a wrong virtual model.

In a preferred embodiment step c) further comprises c3) requesting a new second dataset.

In this preferred embodiment, the user is requested to provide a new second dataset in order to continue generating the virtual model.

In an embodiment, the method further comprises f) exporting the third dataset to a software package that enables articulation of said virtual articulator.

In this embodiment, the virtual model is exported and can be used to design a virtual prosthetic dental replacement by articulating the virtual model in a software package.

It is object of the present invention to provide a method for generating a virtual model of a maxillary cast in a virtual articulator to correspond to a maxillary cast in a physical articulator with fewer steps.

This object is achieved according to the invention with a computer-implemented method for generating a virtual model of a maxillary cast in a virtual articulator to correspond to a maxillary cast in a physical articulator by using a first holder on which a first cloud of markers is applied, the method comprising the steps of: a) receiving, from a memory, a virtual articulator dataset representing a virtual articulator reference model calibrated to correspond to the physical articulator, the virtual articulator reference model comprising the first cloud of markers; b) receiving a first dataset created by a scanner and representing a virtual model of the maxillary cast provided in the first holder; c) creating a third dataset by aligning the first cloud of markers in the first dataset with the first cloud of markers in the virtual articulator dataset; and d) processing the third dataset to display the virtual model of the maxillary cast in the virtual articulator.

By providing a virtual articulator dataset that is stored in the memory and comprises a virtual articulator dataset representing a virtual articulator reference model calibrated to correspond to the physical articulator, the scanned maxillary cast in the first holder can be relatively positioned in the virtual articulator reference model by aligning the markers. As such, only one scan needs to be performed to create the full virtual model of the maxillary cast in the virtual articulator.

It is object of the present invention to provide a method for generating a virtual model of a mandibular cast in a virtual articulator to correspond to a mandibular cast in a physical articulator with fewer steps.

This object is achieved according to the invention with a computer-implemented method for generating a virtual model of a mandibular cast in a virtual articulator to correspond to a mandibular cast in a physical articulator by using a second holder on which a second cloud of markers is applied, the method comprising the steps of: a) receiving, from a memory, a virtual articulator dataset representing a virtual articulator reference model calibrated to correspond to the physical articulator, the virtual articulator reference model comprising the second cloud of markers; b) receiving a second dataset created by a scanner and representing a virtual model of the mandibular cast provided in the second holder; c) creating a third dataset by aligning the second cloud of markers in the second dataset with the second cloud of markers in the virtual articulator dataset; and d) processing the third dataset to display the virtual model of the mandibular cast in the virtual articulator.

By providing a virtual articulator dataset that is stored in the memory and comprises a virtual articulator dataset representing a virtual articulator reference model calibrated to correspond to the physical articulator, the scanned mandibular cast in the second holder can be relatively positioned in the virtual articulator reference model by aligning the markers. As such, only one scan needs to be performed to create the full virtual model of the mandibular cast in the virtual articulator.

### Brief description of the drawings

The invention will be further explained by means of the following description and the appended figures.
Figure 1 shows a perspective view of an articulator.
Figure 2 shows a side-view of a different articulator with a maxillary and mandibular cast placed in the articulator.
Figure 3 shows a perspective view of a virtual articulator.
Figure 4 shows a flowchart of a method for creating a virtual model of the physical situation of a maxillary and mandibular cast in an articulator.
Figure 5 shows a flowchart of a method for creating a virtual articulator reference model.
Figures 6a to 6d show a perspective view of the lower holder, the upper holder, the calibration piece, and the two halves of the calibration piece respectively.
Figure 7 shows the articulator of Figure 1 with the calibration piece of Figure 6c placed between the upper and lower member of the articulator.
Figures 8a to 8c show different baseplates for the upper and lower holder depending on the type of articulator.
Figure 9 shows a system for creating a virtual model of the physical situation of a maxillary and mandibular cast in an articulator.

### Description of the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

Furthermore, the various embodiments, although referred to as "preferred" are to be construed as exemplary manners in which the invention may be implemented rather than as limiting the scope of the invention.

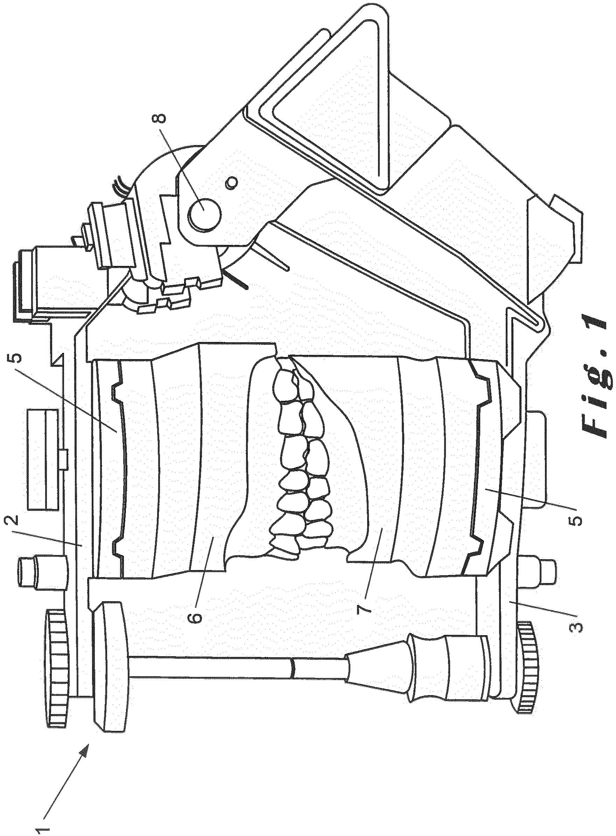

As used herein, the term "articulator" refers to a mechanical device in which a maxillary and mandibular cast can be attached to simulate movements of the TMJ and jaws. Such an articulator is shown in Figure 1. The articulator 1 comprises an upper and a lower member 2, 3 on which spacers 4 are foreseen with mounting plates 5 that can be used to mount the maxillary and mandibular casts 6, 7 as shown in Figure 2. The articulator 1 further comprises a hinge axis 8 which functions as the TMJ. As used herein, the term "hinge-axis" refers to the axis of the articulator 1 which represents the virtual axis from the left TMJ to the right TMJ from ear to ear.

Each articulator 1 has a zero position with a pre-defined height and position. This zero position can vary depending on the brand of articulator 1, e.g. "SAM@ 2P", "Whip Mix Denar ® Mark 33", "KaVo PROTAT® evo", etc. The zero position is also different within a single brand of articulators 1 due to tolerance levels in the manufacture process. As such, in general, no two articulators 1 are exactly the same.

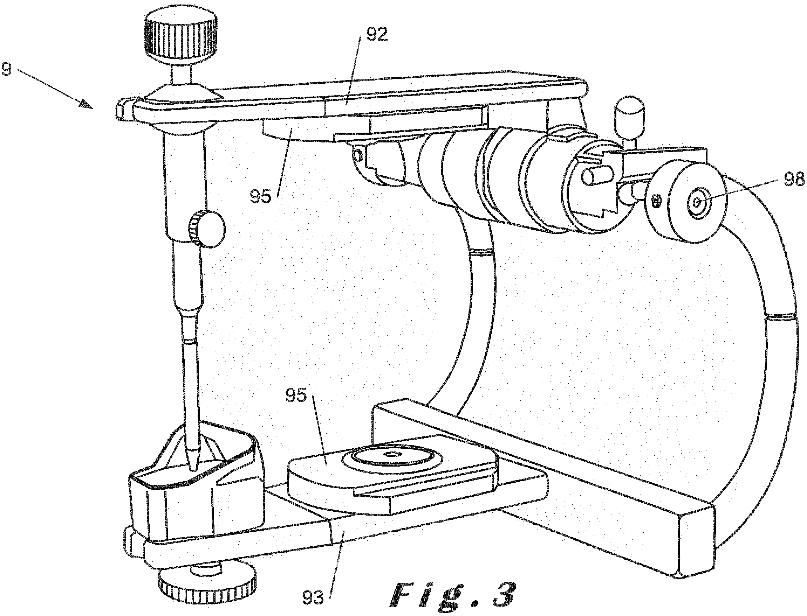

As used herein, the term "virtual articulator" refers to a digital model of an articulator which can be combined with a virtual model of a maxillary and mandibular cast to simulate movements of the TMJ and jaws. Such a virtual articulator is shown in Figure 3. The virtual articulator 9 also comprises a virtual upper member 92 and a virtual lower member 93 on which virtual mounting plates 95 are foreseen that can be used to mount virtual models of the maxillary cast 6 and mandibular casts 7. The virtual articulator 9 also comprises a virtual hinge-axis 98 which functions as the TMJ.

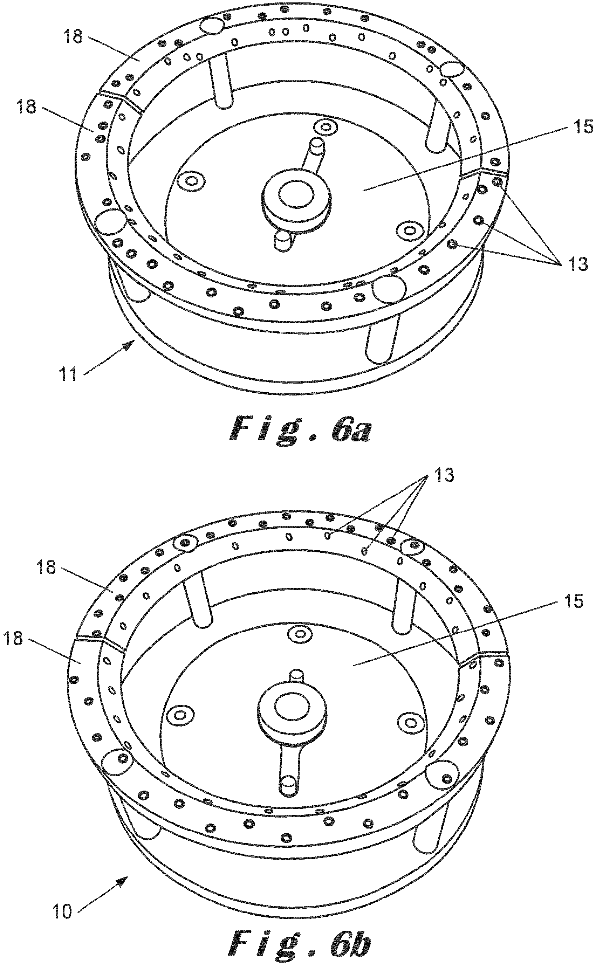

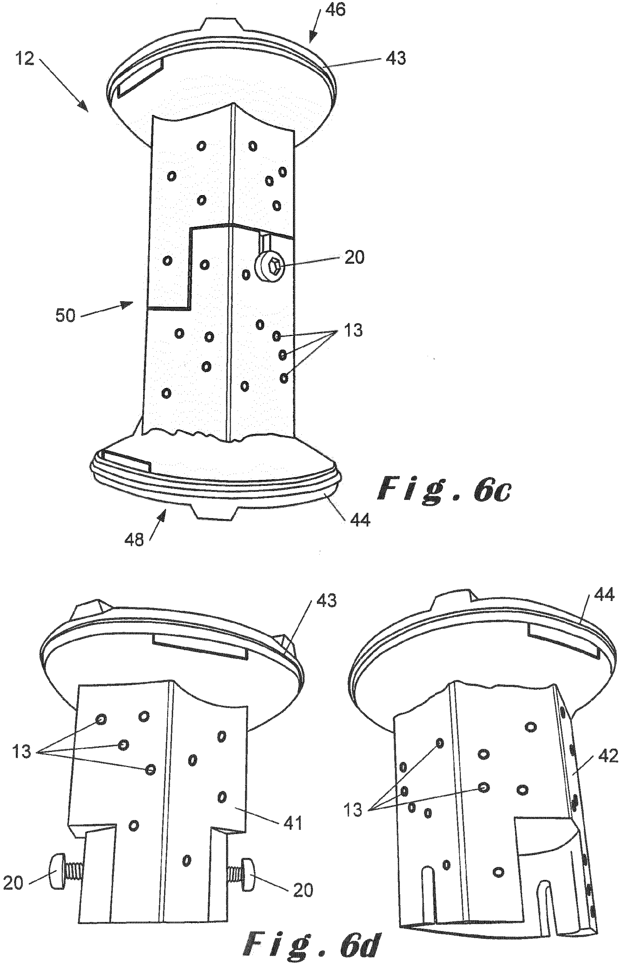

To calibrate the virtual articulator 9 to correspond to a physical articulator 1, a set of calibration members may be used. A set of calibration members is illustrated in Figure 6.

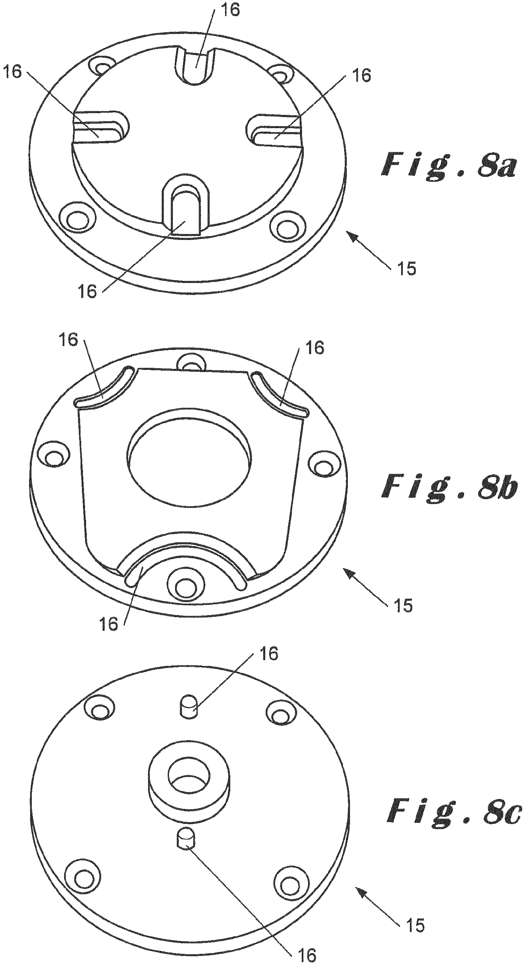

Figure 6a illustrates a lower holder 11. The lower holder 11 has a baseplate 15 connected to a support 17. The baseplate 15 corresponds to the mounting plate 5 of a specific type of articulator 1. Figures 8a to 8c show different baseplates 15 for different articulators 1. The lower holder 11 further comprises two ring halves 18 mounted on the support 17. Markers 13 are randomly applied to the ring halves 18. Each of the ring halves 18 is removable and only one of the ring halves 18 with markers 13 is sufficient as will be discussed later on in the application. The possibility to remove one ring halve provides the advantage that large dental casts can be placed on the baseplate 15 which would not fit between the circle formed by the ring halves 18. The markers 13 are applied randomly on the lower holder 11. This has the advantage that each pattern of markers 13 is unique and can be used to identify the specific holder 11.

In an alternative embodiment, the holders 10, 11 do not comprise ring halves 18. Instead, the markers 13 are directly applied to the holders 10, 11. However, in this alternative embodiment, the markers 13 are more difficult to scan and, as such, a longer scan time is needed.

Figure 6b illustrates an upper holder 10. The upper holder 10 has the same structure as the lower holder 11, but has its own unique random markers 13 pattern. For articulators with a different upper mounting plate and lower mounting plate 5, also the upper baseplate and lower baseplate 15 will be different.

Figure 6c illustrates a calibration device 12. The calibration device 12 is a device which reflects the exact distance between the upper member 2 and the lower member 3 of a specific articulator 1 in the zero position. The outside surfaces 46, 48 on opposite sides of the calibration device 12 are arranged to be mounted on the mounting plates 5 of the articulator and thus also on the baseplates 15 of the upper holder 10 and lower holder 11.

As illustrated in Figure 6d, the calibration device 12 may be assembled from a first calibration element 41, a second calibration element 42, a first connection element 43, and a second connection element 44. The first connection element 43 and the second connection element 44 are in that case on one side arranged to be positioned on the mounting plates 5 of the articulator and thus also on the baseplates 15. The first calibration element 41, the second calibration element 42, the first connection element 43, and the second connection element 44 can be assembled in different lengths to correspond with a specific distance between the upper member 2 and the lower member 3 of a specific articulator 1. Once assembled, the length of the calibration device 12 is fixed in the articulator 1. In the calibration device of Figure 6c, the first calibration element 41 is connected with the second calibration element 42 with screws forming a central calibration base 50. Further, the first calibration element 41 is fixed to the first connection element 43 by plastering, and the second calibration element 42 is fixed to the second connection element 44 by plastering. The plastering is done when the calibration device 12 is in the specific articulator 1 to ensure the exact distance. In alternative embodiments, the calibration device 12 is adjustable and fixable in any other way known in the art. The calibration device 12 further comprises markers 13 randomly provided over its surface. In the calibration device 12 of Figure 6c, the markers are provided on the surface of the central calibration base 50.

The markers 13 are positioned randomly on the calibration members, e.g. the lower holder 11. The random positioning of the markers 13 may be effected by applying the markers 13 manually to each individual piece, i.e. the upper holder 10, the lower holder 11, and the calibration device 12, by the dentist or dental laboratory assistant who uses the device. Note that the markers 13 could also be applied before the pieces are sold commercially by placing them in an automated or manual manner on the pieces.

Once the calibration device 12 corresponds with the exact distance between the upper member 2 and the lower member 3, this exact distance between the upper member 2 and the lower member 3 can be transferred to a virtual articulator. In the current invention, a virtual articulator reference model is created. The virtual articulator reference model is a model based on a virtual articulator but optimized to simulate in a fast and accurate way a maxillary cast 6 and/or a mandibular cast 7 in the virtual articulator 9.

Referring to Figures 6c and 6d, the calibration base 50 of Figures 6c and 6d is made from two halves 41, 42 which can be fitted together using the screws 20 which fit in slots 21. The calibration base 50 can alternatively be produced as a single block but the two halves 41, 42 make it easier to plaster the connection pieces 43, 44, as each halve 41, 42 is plastered to one of the two connection elements 43, 44. Moreover, the screws 20 in combination with the slots 21 allow placing the two halves 41, 42 together with a certain distance between them. As such, the two halves 41, 42 offer a wider range to vary the length of the calibration device 12 depending on the type of articulator 1.

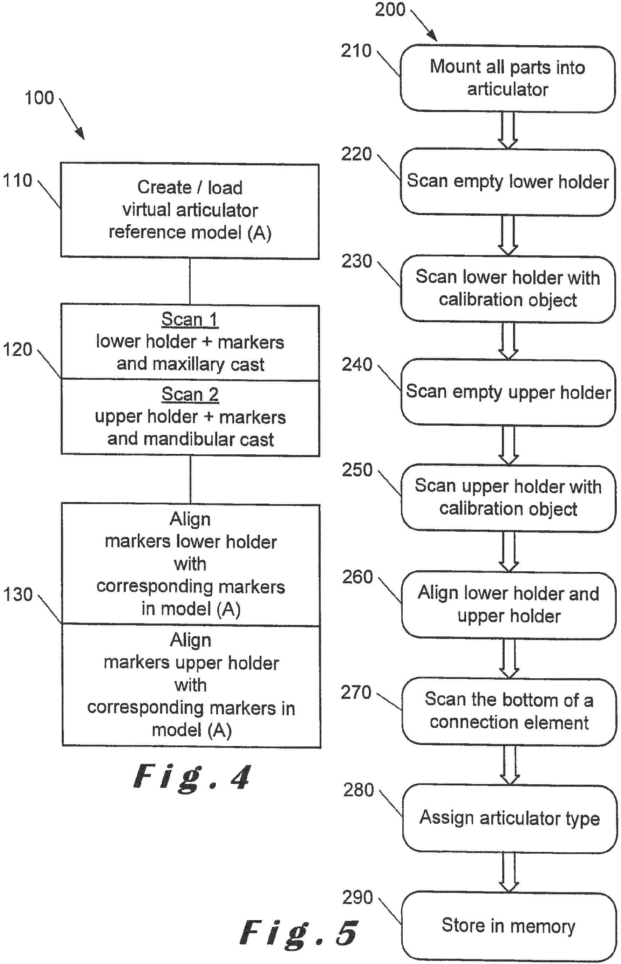

Figure 5 shows a flowchart of a method 200 for creating the virtual articulator reference model. This method 200 can use the upper holder 10, the lower holder 11, and the calibration device 12 illustrated in Figures 6a to 6d. As discussed above, each of the upper holder 10, the lower holder 11, and the calibration device 12 have a plurality of markers 13 applied to them.

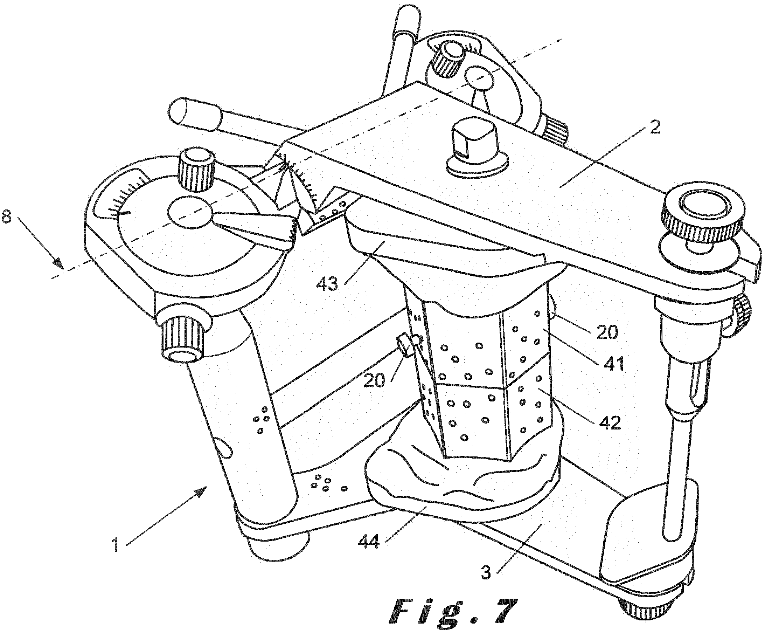

At step 210 the calibration device 12 which is at that step still adjustable in length is placed in the articulator 1. In this step the connection elements 43, 44 are plastered to the calibration elements 41, 42 to ensure that the assembled calibration device 12 fits exactly in the articulator 1 when it is in its zero position. The assembled, fixed calibration device 12 placed in an articulator 1 is shown in Figure 7. As indicated above, the calibration device 12 with markers could also be made in a different way known in the art.

At step 220 of method 200, the markers 13 on the lower holder 11 are scanned. This results in a first cloud of markers 51 stored in a first dataset 61 and can be used to identify the specific lower holder 11. This is possible since on each different lower holder 11 the markers 13 are placed randomly which results in a unique cloud of markers 51 for each lower holder 11.

At step 230, the calibration device 12 is positioned on the lower holder 11. As the lower holder 11 has a baseplate 15 which matches the mounting plate 5 of the specific articulator 1, the connection element 43 of the calibration device 12 matches on the lower holder 11. Subsequently, the markers 13 on the lower holder 11 with the calibration piece 12 are scanned. This results in a second cloud of markers 52 stored in a second dataset 62.

At step 240, the markers 13 on the upper holder 10 are scanned. This results in a third cloud of markers 53 stored in a third dataset 63 and can be used to identify the specific upper holder 10 due to the use of random markers 13.

At step 250, the calibration device 12 is positioned on the upper holder 10. As the upper holder 10 has also a baseplate 15 which matches the mounting plate 5 of the specific articulator 1, the connection element 44 of the calibration device 12 matches on the upper holder 10. Subsequently, the markers 13 on the upper holder 10 with the calibration piece 12 are scanned. This results in a fourth cloud of markers 54 stored in a fourth dataset 64.

At step 260, the second dataset 62 and the fourth dataset 64 are combined by aligning the markers 13 of the calibration device 12 in both datasets. The result is a fifth dataset 65 in which the cloud of markers 55 represents the markers 13 on the combined lower holder 11, calibration device 12, and upper holder 10. Because the length of the calibration device 12 (including the connection elements 43, 44) corresponds exactly with the distance between the upper member 2 and the lower member 3 of a specific articulator 1, the upper holder 10 and the lower holder 12 are separated by the same exact distance between the upper member 2 and the lower member 3. Therefore, the fifth dataset 65 includes information (the positions of the markers) to simulate the accurate distance between the upper member 2 and the lower member 3 of the articulator 1. Further, this fifth dataset 65 includes a relative position in the three-dimensional space of each marker 13 with respect to other markers 13 in the cloud of markers 55.

Alternatively, steps 230, 250, and 260 of method 200 can be combined into a single step by scanning the calibration device 12 with the upper holder 10 and the lower holder 11 positioned on the calibration device 12 such that the calibration device 12 is positioned between the upper holder 10 and the lower holder 11. This results in an alternative fifth cloud of markers 55 stored in an alternative fifth dataset 65. The advantage of scanning in two steps, steps 230 and 250, is that a higher accuracy can be reached.

In a preferred embodiment, a further alternative fifth dataset 65 only includes information on the cloud of markers associated to the upper holder 10 and the lower holder 11 accurately positioned relative to one another, the information relating to the cloud of markers of the calibration device 12 having been removed from the further alternative fifth dataset 65. In this embodiment, the fifth dataset 65 takes up less memory space.

Further, the order of the steps can be changed. For example, it is possible to scan both the empty holders 10, 11 before scanning them positioned on the calibration piece 12 or the other way around, i.e. scanning the holders 10, 11 with the calibration piece 12 before scanning the empty holders 10, 11.

While the cloud of markers 55 in the fifth dataset 65 contains information to simulate an accurate representation of the distance between the upper member 2 and the lower member 3 of the articulator 1, there is no information on how the cloud of markers 55 is oriented with respect to the articulator 1. Therefore, at step 270, a scan is performed of the bottom of one of the connection elements 43, 44 plastered to the calibration device 12 in combination with at least three markers 13 on the calibration device 12. Contrary to the previous scans, a full image scan is executed and not only a cloud of markers. This full image scan including a number of markers 13 is stored in a sixth dataset 66.

At step 280 the sixth dataset 66 is used to determine the articulator type corresponding to the scanned image of the connection element 43, 44. This can be done by analysing the scanned bottom of the connection element 43, 44 and compare this with reference information. As each articulator type, i.e. each brand, has a distinct mounting plate 5, the bottom of the connection element 43, 44 corresponds to one of the types of mounting plates 5. For example, in Figure 8c there are two pins 16 which can act as reference points since the corresponding connection element 43, 44 will have two counterparts (female parts) in which the pins 16 can be fitted. As shown in Figures 8a and 8b other reference points can be used for different baseplates 15. Once the articulator type is known, the virtual articulator 9 corresponding with the determined articulator type can be loaded and a number of reference points in the scanned image of the connection element 43, 44 can be aligned with the virtual mounting plate 95 of the virtual articulator 9.

Aligning the positioning element 43, 44 with the virtual mounting plate 95 can for example be done by aligning two reference points corresponding to centre of the top surfaces of the pins 16 (shown in Figure 8c on a physical equivalent).

By aligning reference points (available in the sixth dataset) of the connection element 43, 44 in the virtual articulator 9, also the markers 13 are aligned correctly in the virtual articulator 9. By this positioning of the number of markers 13, the fifth cloud of markers 55 can be positioned correctly in the virtual articulator 9.

The scanned markers 13 available in the sixth dataset 66 can be aligned with the corresponding markers 13 in the fifth cloud of markers 55 available in the fifth dataset 65. By this alignment, the entire fifth cloud of markers 55 can be positioned accurately in the virtual articulator 9.

To execute full alignment, at least three scanned markers 13 who are not collinear have to be available in the sixth dataset 66. Alignment of these three scanned markers 13 with the corresponding three markers 13 in the fifth dataset is sufficient to correctly align the fifth cloud of markers 55 in the virtual articulator 9.

Alternatively, at step 270, it is also possible to scan the upper holder 10 or the lower holder 11 from the top with a few of the markers 13 on respectively the upper holder 10 or the lower holder 11 to create an alternative sixth dataset. This is possible as a top scan of one of the holders 10, 11 also includes the baseplate 15 which matches the mounting plate 5 on the upper and the lower member 2, 3 and thus includes similar reference points 16 which can be analysed to position the cloud of markers in the virtual articulator.

The result of step 280 is a virtual articulator 9 in which the fifth cloud of markers 55 is positioned with respect to either the virtual upper member 92 or with respect to the virtual lower member 93.

In an embodiment, at step 270, two scans can be performed. A first scan can be a scan of the upper holder 10 from the top in combination with at least three markers 13 on the upper holder 10 or a scan of the bottom of the upper connection element 43 connected to the calibration device 12 in combination with at least three markers 13 on the calibration device 12. A second scan can be a scan of the lower holder 11 from the top in combination with at least three markers 13 on the lower holder 11 or a scan of the bottom of the lower connection element 44 connected to the calibration device 12 in combination with at least three markers 13 on the calibration device 12. The first scan is used to determine the position of the virtual upper member 92 relative to the cloud of markers 53 on the upper holder 10, while the second scan is used to determine the position of the virtual lower member 93 relative to the cloud of markers 51 on the lower holder 11.

In this embodiment, the result of step 280 is a virtual articulator 9 in which the fifth cloud of markers 55 is positioned with respect to both the virtual upper member 92 and with respect to the virtual lower member 93. The virtual articulator 9 has a tolerance parameter for the distance between the virtual upper member 92 and the virtual lower member 93. The tolerance parameter has a range corresponding to the manufacturing tolerance of the specific type of articulator 1. These tolerance levels are provided by the manufacturer or collected by testing. As such, the tolerance level of the virtual articulator 9 can in this embodiment be determined from the exact distance between the virtual upper member 92 and the virtual lower member 93 which corresponds with the distance between the upper member 2 and the lower member 3 of the articulator 1. The tolerance parameter is a value. which provides an indication to a user of how much his particular articulator 1 deviates after calibration with respect to a zero point setting of the articulator 1.

At step 290, the virtual articulator 9 with the fifth cloud of markers 55 positioned accurately with respect to at least one of the virtual upper member 92 or the virtual lower member 93 can then be stored in a memory. This storage can be done locally, on a remote server, or on a portable memory. The combination of the virtual articulator 9 with the cloud of markers is called the virtual articulator reference model. This model is a simulation of a specific articulator 1 and, in an embodiment, includes an accurate distance between the virtual upper member 92 and the virtual lower member 93 corresponding to the distance between the upper member 2 and the lower member 3 of the specific articulator 1.

With this model, as will be described below, maxillary casts and/or mandibular casts can be simulated very fast and accurate in the virtual articulator. Therefore, it is called that the virtual articulator is calibrated.

Figure 4 illustrates a method 100 for creating a virtual model of a maxillary cast 6 and a mandibular cast 7 in an articulator 1.

At step 110 a virtual articulator reference model is created or loaded. In this model, the distance between the markers of the upper holder 10 and the markers of the lower holder 11 are very accurate within a tolerance of a few micrometres, in particular below 10 µm and preferably around 6 µm. Furthermore, the same tolerance applies to the orientation of the cloud of markers in the virtual articulator 9.

At step 120, both the upper holder 10 (including its markers 13) with the maxillary cast 6 and the lower holder 11 (including its markers 13) with the mandibular cast 7 are each scanned to create a virtual model of the maxillary cast 6 in the upper holder 10 and a virtual model the mandibular cast 7 in the lower holder 11. The result of these scans is stored in a seventh dataset 67 and an eight dataset 68.

At step 130, the markers 13 scanned on the upper holder 10 are aligned in the virtual articulator reference model with the corresponding markers 13 of the upper holder 10 in the fifth cloud of markers. In the same way, the markers 13 scanned on the lower holder 11 are aligned in the virtual articulator reference model with the corresponding markers 13 of the lower holder 11 in the fifth cloud of markers. Because the virtual articulator model comprises a positioning of the fifth cloud of markers 55 positioned accurately with respect to at least one of the virtual upper member 92 or the virtual lower member 93, both alignments ensure that both the virtual maxillary cast and the virtual mandibular cast are positioned accurately in the virtual articulator 9. The result is thus an accurate virtual model of the maxillary cast 6 and the mandibular cast 7 placed in the virtual articulator 9.

In the embodiment where the virtual articulator 9 with the fifth cloud of markers 55 is only positioned accurately with respect to the virtual upper member 92, the position of the virtual lower member 93 with respect to the virtual upper member 92 is derived from the full image scan of the mandibular cast in the lower holder 11. This is possible since the cloud of markers 51 on the lower holder 11 are already accurately positioned with respect to the virtual upper member 92. Therefore, by aligning the markers 13, the full image scan of the mandibular cast in the lower holder 11 is accurately positioned with respect to the virtual upper member 92. Subsequently, as the exact distance between the upper holder 10 and the lower holder 11 is known, the tolerance parameter can be determined based on this relative position. The tolerance parameter determines subsequently the position of the virtual lower member 93 of the virtual articulator relative to the virtual upper member 92. Alternatively, after aligning the markers 13 of the full image scan of the mandibular cast in the lower holder 11, the virtual lower member 93 can be aligned with the lower holder 11 by aligning reference points such that also the virtual lower member 93 is now aligned with the virtual upper member 92. The tolerance parameter can in this alternative embodiment be determined after positioning the virtual lower member 93 as an indication for the tolerance of the articulator 1.

In the alternative embodiment where the virtual articulator 9 with the fifth cloud of markers 55 is only positioned accurately with respect to the virtual lower member 93, the position of the virtual upper member 92 with respect to the virtual lower member 93 is derived from the full image scan of the maxillary cast in the upper holder 10. This is possible since the cloud of markers 53 on the upper holder 10 are already accurately positioned with respect to the virtual lower member 93. Therefore, by aligning the markers 13, the full image scan of the maxillary cast in the upper holder 10 is accurately positioned with respect to the virtual lower member 93. Subsequently, as the exact distance between the upper holder 10 and the lower holder 11 is known, the tolerance parameter can again be determined based on this relative position. The tolerance parameter determines subsequently the position of the virtual upper member 92 of the virtual articulator relative to the virtual lower member 93. Alternatively, after aligning the markers 13 of the full image scan of the maxillary cast in the upper holder 10, the virtual upper member 92 can also be aligned with the upper holder 10 by aligning reference points such that also the virtual upper member 92 is now aligned with the virtual lower member 93. The tolerance parameter can in this alternative embodiment be determined after positioning the virtual upper member 92 as an indication for the tolerance of the articulator 1.

An advantage of this method is that the virtual articulator reference model only needs to be created a single time. Once the virtual articulator reference model is created for a specific articulator with specific upper holder and specific lower holder (identifiable by their markers 13), virtual models of a maxillary casts 6 and/or mandibular cast 7 can be created fast and accurate. Only two scans need to be performed to create an accurate virtual model of the maxillary cast 6 and the mandibular cast 7. The computer implemented method receives the scanned information and positions the virtual models in the virtual articulator.

Once the virtual maxillary cast 96 and the virtual mandibular cast 97 is correctly positioned in the virtual articulator 9, virtual movements can be performed to create various different perspectives and cross-sectional views to design for example a prosthetic dental replacement virtually.

The scans described above may be performed by the commercially available "GC Aadva Lab Scanner". This scanning is fully automated with fast and accurate scan results. Scan accuracy is below 6 µm. Alternatively, scanning is performed with an alternative scanner known in the art.

Further, a pair of upper holder 10 and lower holder 11 is linked to a specific articulator 1. This specific pair of upper holder 10 and lower holder 11 cannot be used for a different articulator 1 because different articulators have not the exact same distance between the upper member 2 and the lower member 3 due to tolerances. Therefore, to have a one-to-one relationship between a specific articulator 1 and a specific virtual articulator 9, the pair of upper holder 10 and lower holder 11 which is used to create the virtual articulator reference model of a specific articulator 1 remains linked to this specific articulator 1.

In rare situations however, for example where the specific articulator 1 is broken, it would be possible to create a new virtual articulator reference model using the same upper and lower holders 10, 11 with a different articulator 1 using the method 200 again.

During the creation of the virtual articulator reference model using method 200 several control steps can be included. One control step is to check in the sixth dataset if the user has input the correct type of articulator 1 before the scanning method 200 commenced..

During scanning of the maxillary casts 6 and/or the mandibular casts 7 in the upper holder 10 and the lower holder 11 respectively using method 100, several control steps can be included. When the mandibular cast 7 is scanned in the lower holder 11, the method 100 can include a step which checks the markers 13 on the lower holder 11 and determines if the correct lower holder 11 is used, i.e. the lower holder 11 that is linked to the virtual articulator model which the user has provided or selected. Similarly, when a specific object needs to be scanned, e.g. the upper holder 10 of a specific articulator 1 with the maxillary cast 6, the method 100 may include steps to check that the correct object is scanned and, if not, to provide feedback that the object placed in the scanner is not correct.

Once the full model is completed it is also possible to perform additional scans of an individual tooth or a number of selected teeth. This can be achieved by indicating the specific tooth or teeth to be scanned in the virtual model and by cutting out the corresponding tooth or teeth in the virtual casts 6, 7. Again a full image scan is performed but there is no need to use markers 13 as the placement of the tooth or teeth is or are already known in relation to the other teeth in the virtual model.

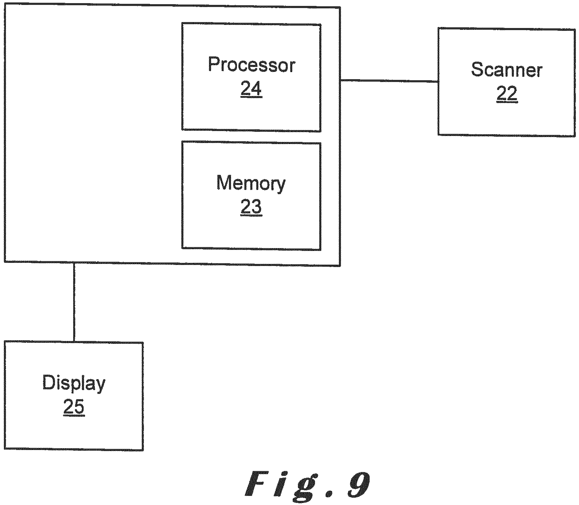

Figure 9 shows a system for creating a virtual model of the physical situation of a maxillary cast 6 and a mandibular cast 7 in an articulator 1. The system comprises a scanner 22, a memory 23, and a processor 24. The processor 24 is receiving the different datasets from the scanner 22 when performing the steps of the methods 100, 200 and stores the datasets in the memory 22. The processor is further processing the datasets to display an image corresponding to the datasets on a display 25. The system can further be part of a network structure with multiple processors and servers.

Although aspects of the present disclosure have been described with respect to specific embodiments, it will be readily appreciated that these aspects may be implemented in other forms.

## Claims

1. A computer-implemented method (100) for generating a virtual model of a maxillary cast (6) and a mandibular cast (7) in a virtual articulator (9) to correspond to a maxillary cast (6) and a mandibular cast (7) in a physical articulator (1) by using a first holder (10) on which a first cloud of markers (53) is applied and a second holder (11) on which a second cloud of markers (51) is applied, the method (100) comprising the steps of:
a) receiving (110), from a memory, a virtual articulator dataset representing a virtual articulator reference model calibrated to correspond to the physical articulator (1), the virtual articulator reference model comprising the first cloud of markers (53) and the second cloud of markers (51);
b) receiving (120) a first dataset created by a scanner and representing a virtual model of the maxillary cast (7) provided in the first holder (10);
c) receiving (120) a second dataset created by a scanner and representing a virtual model of the mandibular cast (6) provided in the second holder (11);
d) creating (130) a third dataset by aligning the first cloud of markers (53) in the first dataset with the first cloud of markers (53) in the virtual articulator dataset and by aligning the second cloud of markers (51) in the second dataset with the second cloud of markers (51) in the virtual articulator dataset; and
e) processing the third dataset to display the virtual model of the maxillary cast and the mandibular cast in the virtual articulator (9).

2. The method (100) according to claim 1, wherein the virtual articulator reference model comprises information on a positioning of a virtual upper member (92) of the virtual articulator (9) with respect to the first cloud of markers (53) and step d) comprises:
determining the position of a virtual lower member (93) of the virtual articulator (9) with respect to the virtual upper member (92) of the virtual articulator (9) based on information available in the virtual model of the mandibular cast provided in the second holder (11).

3. The method (100) according to claim 1, wherein the virtual articulator reference model comprises information on a positioning of a virtual lower member (93) of the virtual articulator (9) with respect to the second cloud of markers (513) and step d) comprises:
determining the position of a virtual upper member (92) of the virtual articulator (9) with respect to the virtual lower member (93) of the virtual articulator (9) based on information available in the virtual model of the maxillary cast provided in the first holder (10).

4. The method (100) according to any one of the preceding claims, wherein step b) comprises:
b1) determining if the first cloud of markers (53) in the first dataset can be aligned with the first cloud of markers (53) in the virtual articulator dataset; and
b2) displaying an error message if the first cloud of markers in the first dataset can not be aligned with the first cloud of markers in the virtual articulator dataset.

5. The method (100) according to claim 4, wherein step b) further comprises:
b3) requesting a new first dataset.

6. The method (100) according to any one of the preceding claims, wherein step c) comprises:
c1) determining if the second cloud of markers (51) in the second dataset can be aligned with the second cloud of markers (51) in the virtual articulator dataset; and
c2) displaying an error message if the second cloud of markers in the second dataset can not be aligned with the second cloud of markers in the virtual articulator dataset.

7. The method (100) according to claim 6, wherein step c) further comprises:
c3) requesting a new second dataset.

8. The method (100) according to any one of the preceding claims, wherein the method further comprises:
f) exporting the third dataset to a software package that enables articulation of said virtual articulator (9).

9. A computer-implemented method (100) for generating a virtual model of a maxillary cast (96) in a virtual articulator (9) to correspond to a maxillary cast (6) in a physical articulator (1) by using a first holder (10) on which a first cloud of markers (53) is applied, the method (100) comprising the steps of:
a) receiving (110), from a memory, a virtual articulator dataset representing a virtual articulator reference model calibrated to correspond to the physical articulator (1), the virtual articulator reference model comprising the first cloud of markers (53);
b) receiving a first dataset created by a scanner and representing a virtual model of the maxillary cast (7) provided in the first holder (10);
d) creating a third dataset by aligning the first cloud of markers (53) in the first dataset with the first cloud of markers (53) in the virtual articulator dataset; and
e) processing the third dataset to display the virtual model of the maxillary cast in the virtual articulator (9).

10. A computer-implemented method (100) for generating a virtual model of a mandibular cast (97) in a virtual articulator (9) to correspond to a mandibular cast (7) in a physical articulator (1) by using a second holder (11) on which a second cloud of markers (51) is applied, the method (100) comprising the steps of:
a) receiving (110), from a memory, a virtual articulator dataset representing a virtual articulator reference model calibrated to correspond to the physical articulator (1), the virtual articulator reference model comprising the second cloud of markers (51);
c) receiving a second dataset created by a scanner and representing a virtual model of the mandibular cast (6) provided in the second holder (11);
d) creating a third dataset by aligning the second cloud of markers (51) in the second dataset with the second cloud of markers (51) in the virtual articulator dataset; and
e) processing the third dataset to display the virtual model of the mandibular cast in the virtual articulator (9).
